# EUROPÄISCHE PATENTSCHRIFT

(11) **EP 4 264 178 B1**
(45) Veröffentlichungstag und Bekanntmachung des Hinweises auf die Patenterteilung: **23.09.2026**
(21) Anmeldenummer: 22720921.0
(22) Anmeldetag: 09.03.2022
(51) Int. Cl.: G01B 11/14, G01B 11/26

(54) **VERFAHREN UND MESSSYSTEM ZUR DURCHFÜHRUNG UND DARSTELLUNG EINES MESSPROZESSES**
METHOD AND MEASUREMENT SYSTEM FOR CARRYING OUT AND DISPLAYING A MEASUREMENT PROCESS
PROCÉDÉ ET SYSTÈME DE MESURE POUR LA MISE EN OEUVRE ET L'AFFICHAGE D'UN PROCESSUS DE MESURE

(30) Priorität: 06.05.2021 DE 102021204614
(43) Veröffentlichungstag der Anmeldung: 25.10.2023
(73) Patentinhaber: Micro-Epsilon Messtechnik GmbH & Co. KG, 94496 Ortenburg (DE)
(72) Erfinder: LOFERER, Hannes, 94496 Ortenburg (DE); LIEBL, Andreas, 94474 Vilshofen (DE); WISSPEINTNER, Thomas, 94496 Ortenburg (DE)
(74) Vertreter: Ullrich & Naumann PartG mbB
(86) Internationale Anmeldenummer: PCT/DE2022/200038
(87) Internationale Veröffentlichungsnummer: WO 2022/233370

(56) Entgegenhaltungen:
- EP-B1- 0 771 406
- US-A- 5 418 730
- US-A1- 2016 356 889
- US-A1- 2018 031 868

## Beschreibung

Die Erfindung betrifft ein Verfahren zur Durchführung und/oder Darstellung eines Messprozesses mittels eines Messsystems.

Des Weiteren betrifft die Erfindung ein entsprechendes Messsystem zur Durchführung und/oder Darstellung eines Messprozesses.

Schließlich betrifft die Erfindung ein entsprechendes Computerprogrammprodukt.

Verfahren und Systeme der in Rede stehenden Art sind seit Jahren aus der Praxis bekannt. Demnach existieren für die messtechnische Erfassung von Gegenständen diverse Produkte, die den Bediener/Benutzer bei der Durchführung und Darstellung eines Messprozesses unterstützen können. Dies erfolgt in der Regel softwaregestützt.

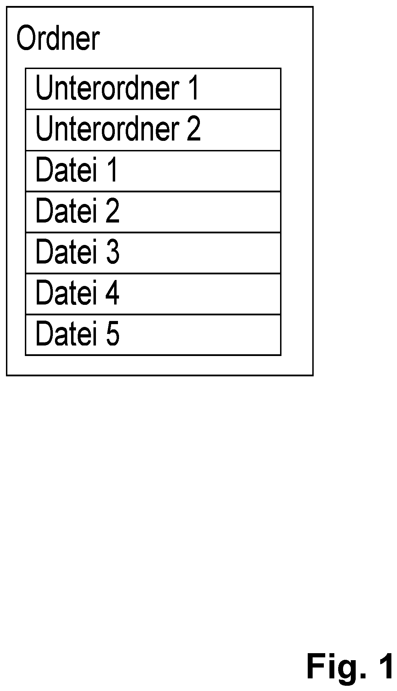

Entsprechende Softwarepakete stehen vor der Herausforderung, die von einer Applikation verwalteten Entitäten für einen Benutzer sinnvoll am Bildschirm darzustellen. Für einfache Anwendungen reicht eine Listendarstellung aus. Beispielsweise kann für eine Listendarstellung auf die Dateianzeige im Windows Explorer verwiesen werden, wonach mehrere Dateien eines Ordners im rechten Teil eines Fensters als Liste dargestellt werden (vgl. Fig. 1). Besonders nachteilig an dieser Darstellung gemäß Fig. 1 ist jedoch, dass keine Abhängigkeiten oder Bezüge zwischen den Entitäten dargestellt werden können. Alle Dateien im Fenster sind voneinander unabhängig.

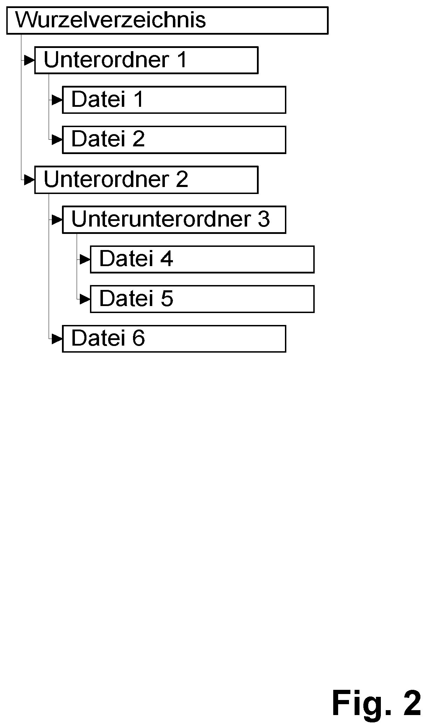

Um beim Beispiel des Explorers zu bleiben: Die Abhängigkeiten zwischen den Ordnern eines Laufwerks können auch hierarchisch als Baumstruktur im linken Teil eines dargestellten Fensters angezeigt werden. Fig. 2 zeigt dazu in einer schematischen Ansicht eine beispielhafte Darstellung von mehreren Ordnern in einer hierarchischen Baumstruktur eines Datei-Managers.

Derartige Darstellungen in Form einer hierarchischen Baumstruktur sind gut geeignet, wenn die darzustellenden Entitäten in strengen 1:n Abhängigkeiten zueinander stehen:
- 1 Ordner kann n Unterordner haben
- 1 Ordner kann n Dateien enthalten

Allerdings gilt auch folgendes:
- 1 Datei kann nur in einem Ordner sein
- 1 Unterordner hat genau einen Überordner
- Dateien haben keine Beziehungen zueinander

Ist dies gegeben, so kann durch Kombination der Baumstruktur auf der linken Seite und der Liste auf der rechten Seite eine übersichtliche und intuitive Darstellung der Entitäten erreicht werden.

Durch die weite Verbreitung der Baum- bzw. Listendarstellung als Standard zur Darstellung der Inhalte von Laufwerken haben diese Konzepte auch Einzug in andere Softwareanwendungen erhalten. Solange die oben genannten Bedingungen hinsichtlich der 1:n Abhängigkeit erfüllt sind, ist dies eine geeignete Wahl.

Allerdings sind insbesondere im Bereich von Softwaresystemen für die messtechnische Erfassung von Gegenständen, beispielsweise für die Geometrievermessung oder die Oberflächeninspektion, Anwendungsfälle von Bedeutung, bei denen zwischen den relevanten Entitäten zusätzliche Beziehungen zu berücksichtigen sind. Bekannte Softwaresysteme sind hier für den Benutzer in der Bedienung schwierig zu handhaben, unübersichtlich und kompliziert.

US 2016/0356889 A1 offenbart ein Messsystem zur Ermittlung der Entfernung zwischen zwei Punkten mittels eines Lasersensors, wobei das System eine Benutzerschnittstelle zur Auswahl der Punkten aufweist.

Der vorliegenden Erfindung liegt daher die Aufgabe zugrunde, ein Verfahren und ein Messsystem zur Durchführung und/oder Darstellung eines Messprozesses derart auszugestalten und weiterzubilden, dass eine einfache Handhabung und eine möglichst effiziente Überprüfung des Messprozesses für den Benutzer möglich sind.

Erfindungsgemäß wird die voranstehende Aufgabe durch die Merkmale des Anspruchs 1 gelöst. Danach ist ein Verfahren zur Durchführung und/oder Darstellung eines Messprozesses mittels eines Messsystems angegeben, wobei das Messsystem mindestens eine Recheneinrichtung, mindestens eine Anzeigeeinrichtung und mindestens ein Messmittel zur messtechnischen Erfassung eines Gegenstands umfasst, wobei der Messprozess über die Anzeigeeinrichtung steuerbar ist, umfassend folgende Verfahrensschritte:
- Aufnehmen von Messwertdaten, die mit dem Messmittel erzeugt werden,
- Erzeugen von Objektentitäten als Entitäten in Bezug auf den messtechnisch zu erfassenden Gegenstand,
- Erzeugen von Kombinationsentitäten als Entitäten in Bezug auf den messtechnisch zu erfassenden Gegenstand,
- Ausgabe von Beziehungen zwischen den erzeugten Entitäten, wobei die Beziehungen für eine vorgebbare Entität dargestellt werden.

Die voranstehende Aufgabe ist des Weiteren durch die Merkmale des Anspruchs 10 gelöst. Danach ist ein Messsystem zur Durchführung und/oder Darstellung eines Messprozesses angegeben, wobei das Messsystem mindestens eine Recheneinrichtung, mindestens eine Anzeigeeinrichtung und mindestens ein Messmittel zur messtechnischen Erfassung eines Gegenstands umfasst, wobei der Messprozess über die Anzeigeeinrichtung steuerbar ist, wobei das Messsystem derart ausgebildet ist,
dass Messwertdaten, die mit dem Messmittel erzeugt werden, aufnehmbar sind,
dass Objektentitäten als Entitäten in Bezug auf den messtechnisch zu erfassenden Gegenstand erzeugbar sind,
dass Kombinationsentitäten als Entitäten in Bezug auf den messtechnisch zu erfassenden Gegenstand erzeugbar sind, und
dass Beziehungen zwischen den erzeugten Entitäten, insbesondere über die Anzeigeeinrichtung, ausgegeben werden, wobei die Beziehungen für eine vorgebbare Entität darstellbar sind.

Schließlich ist die voranstehende Aufgabe durch die Merkmale des Anspruchs 11 betreffend ein Computerprogrammprodukt gelöst.

In erfindungsgemäßer Weise ist zunächst erkannt worden, dass eine einfache Handhabung und eine möglichst effiziente Überprüfung des Messprozesses für den Benutzer realisierbar sind, indem der Messprozess über eine Anzeigeeinrichtung steuerbar ist. Die Durchführung und/oder Darstellung des Messprozesses erfolgt mit einem Messsystem, das mindestens eine Recheneinrichtung, mindestens eine Anzeigeeinrichtung und mindestens ein Messmittel zur messtechnischen Erfassung eines Gegenstands umfasst. Bei einem erfindungsgemäßen Verfahren erfolgt zunächst ein Aufnehmen von Messwertdaten, die mit einem Messmittel erzeugt werden. Die Messwertdaten können dann ggf. einer Datenvorverarbeitung unterzogenen werden.

In weiter erfindungsgemäßer Weise ist erkannt worden, dass die Steuerung und Überprüfung von Berechnungen im Rahmen des Messprozesses erheblich vereinfacht und effizient für den Benutzer gestaltet werden können, indem unterschiedliche Arten von Entitäten gruppiert werden. Über die Anzeigeeinrichtung können Entitäten in Bezug auf den messtechnisch zu erfassenden Gegenstand bestimmt werden. Die Entitäten umfassen Objektentitäten als einen ersten Entitätstyp und Kombinationsentitäten als einen zweiten Entitätstyp. Erfindungsgemäß werden also Objektentitäten als Entitäten in Bezug auf den messtechnisch zu erfassenden Gegenstand bestimmt/erzeugt, wobei die Objektentitäten in einer ersten Gruppe zusammengefasst werden können. Ferner werden Kombinationsentitäten als Entitäten in Bezug auf den messtechnisch zu erfassenden Gegenstand bestimmt/erzeugt, wobei die Kombinationsentitäten in einer zweiten Gruppe zusammengefasst werden können. Kombinationsentitäten basieren auf mehreren Objektentitäten, so dass diverse Berechnungen und Analysen in Bezug auf den messtechnisch zu erfassenden Gegenstand durchgeführt werden können. Schließlich ist im Hinblick auf eine übersichtliche und effiziente Überprüfung von erzeugten Analysen- und Berechnungsergebnissen vorgesehen, dass vorhandene Beziehungen zwischen den erzeugten Entitäten über die Anzeigeeinrichtung dargestellt werden. Damit ist auf raffinierte Weise eine besonders effiziente und übersichtliche Konsistenzprüfung für den Benutzer möglich. Insbesondere eine Visualisierung der Zuordnung von Entitäten, die in einer n:m-Verbindung zueinanderstehen, kann besonders vorteilhaft bereitgestellt werden. Der Benutzer behält den Überblick und bekommt eine effektive Ablaufsteuerung für den Messprozess an die Hand.

Folglich ist mit dem erfindungsgemäßen Verfahren und dem erfindungsgemäßen Messsystem eine verbesserte Handhabung hinsichtlich der Messprozessdurchführung und eine möglichst effiziente Überprüfung des Messprozesses für den Benutzer möglich.

An dieser Stelle sei darauf hingewiesen, dass unter dem Ausdruck "Entität" - insbesondere im Rahmen der Ansprüche und vorzugsweise im Rahmen der Beschreibung - eine charakteristische Eigenschaft in Bezug auf einen Gegenstand und/oder dessen messtechnische Erfassung verstanden werden kann. Entitäten können dabei beispielsweise Parameter bzw. Parameterdaten in Bezug auf den Gegenstand und/oder dessen messtechnische Erfassung sein. Des Weiteren können Entitäten somit beispielsweise ein Merkmal, insbesondere ein messtechnisch erfasstes und/oder geometrisches Merkmal, in Bezug auf einen Gegenstand darstellen.

In Bezug auf den Ausdruck "Objektentität" sei - insbesondere im Rahmen der Ansprüche und vorzugsweise im Rahmen der Beschreibung - darauf hingewiesen, dass unter einer Objektentität eine oder mehrere, den Gegenstand im Hinblick auf die Messaufgabe charakterisierende, Eigenschaften verstanden werden kann.

In Bezug auf den Ausdruck "Kombinationsentität" sei - insbesondere im Rahmen der Ansprüche und vorzugsweise im Rahmen der Beschreibung - darauf hingewiesen, dass unter einer Kombinationsentität eine Kombination aus Objektentitäten, deren Relation zueinander beziehungsweise das Ergebnis dieser Relation mit den Objekteentitäten als Eingangsgröße verstanden werden kann.

In vorteilhafter Weise kann eine Kombinationsentität auf mehreren Entitäten derart basieren, dass die Kombinationsentität mehrere Entitäten als Eingangsentitäten verwendet. Dabei kann eine Eingangsentität eine bereits erzeugte bzw. bereits bestimmte (ggf. geometrische) Objektentität oder eine bereits erzeugte bzw. bereits bestimmte Kombinationsentität sein.

Gemäß der Erfindung repräsentieren die Kombinationsentitäten Auswerteoperationen, wobei zur Bestimmung der Auswerteoperationen mehrere Entitäten kombiniert werden. Die mehreren Entitäten werden hier jeweils als Eingangsentität für die Kombinationsentität verwendet, um - basierend auf den bereits vorliegenden Objekten bzw. auf von diesen zur Verfügung gestellten Parameterdaten - Ergebnisse für die Auswerteoperationen zu berechnen.

In einer vorteilhaften Ausgestaltung kann als Objektentität eine (vorzugsweise mittlere) Temperatur, eine Temperaturverteilung, eine Farbe, ein Farbindex, ein Abstand, eine Geschwindigkeit, eine Beschleunigung, eine Ebene, eine Fläche, ein Normalenvektor und/oder eine Kante in Bezug auf den messtechnisch zu erfassenden (bzw. zu vermessenden) Gegenstand bestimmt werden. Somit lassen sich besonders effektiv und effizient diverse Eigenschaften eines zu vermessenden Gegenstands messtechnisch erfassen und können für eine spätere Analyse und Berechnung von Eigenschaften des zu vermessenden Gegenstands herangezogen werden.

In einer besonders vorteilhaften Ausgestaltung können als Objektentitäten beispielsweise Kanten, Ebenen, Flächen, Kreise, Kugeln, Linien und/oder Schwerpunkte in Bezug auf den zu vermessenden Gegenstand bestimmt werden. Damit können die Objektentitäten beispielsweise geometrische Entitäten in Bezug auf den Gegenstand sein. Somit lassen sich besonders effektiv und effizient diverse Oberflächen eines zu vermessenden Gegenstands abbilden und können für eine spätere Analyse und Berechnung von Eigenschaften des zu vermessenden Gegenstands herangezogen werden.

In einer vorteilhaften Ausgestaltung kann als Kombinationsentität eine Kombination aus Objektentitäten, deren Relation zueinander und/oder das Ergebnis dieser Relation mit den Objekteentitäten als Eingangsgröße in Bezug auf den messtechnisch zu erfassenden (bzw. zu vermessenden) Gegenstand bestimmt werden. Die Kombinationsentitäten können besonders vorteilhaft auf bereits erzeugte Objektentitäten zugreifen und diese Objektentitäten bzw. deren Parameterdaten als Eingangsdaten verwenden. Somit lassen sich durch die Kombination von Objektentitäten besonders effizient diverse Berechnungen, Analysen und Auswertungen durchführen.

In einer besonders vorteilhaften Ausgestaltung können als Kombinationsentitäten beispielsweise Winkel, Abstände und/oder Schnitte in Bezug auf den zu vermessenden Gegenstand bestimmt werden. Die Kombinationsentitäten können besonders vorteilhaft auf bereits erzeugte Objektentitäten zugreifen und diese Objektentitäten bzw. deren Parameterdaten als Eingangsdaten verwenden. Somit lassen sich durch die Kombination von Objektentitäten besonders effizient diverse Berechnungen durchführen.

Gemäß der Erfindung werden die Objektentitäten in einer ersten Gruppierung und die Kombinationsentitäten in einer (vorzugsweise separaten) weiteren Gruppierung über die Anzeigeeinrichtung dargestellt. Somit kann eine Gruppierung von unterschiedlichen Entitätstypen erfolgen, die einem Benutzer eine möglichst strukturierte Visualisierung unterschiedlicher Entitäten ermöglicht.

Gemäß der Erfindung werden Beziehungen für eine vorgebbare Entität dargestellt, sofern die vorgebbare Entität angewählt wird. Somit ist auf raffinierte Weise eine besonders effiziente und übersichtliche Konsistenzprüfung für den Benutzer möglich. So wäre des Weiteren denkbar, dass die Beziehungen nicht ständig angezeigt werden, sondern nur bei Anwahl (beispielsweise per Mouseover und/oder Anklicken) der vorgebbaren Entität. Ferner könnte implementiert sein, dass die Beziehungen für eine vorgebbare Entität für eine vordefinierte, ggf. einstellbare, Zeitdauer dargestellt werden. Schließlich könnten die Beziehungen für die vorgebbare Entität dargestellt werden solange die vorgebbare Entität angewählt bleibt.

In einer vorteilhaften Ausgestaltung können Beziehungen für eine vorgebbare Entität Beziehungen mittels einblendbarer, grafischer Zeigeelemente dargestellt werden. Dies kann in vorteilhafter Weise bei Anwahl der vorgebbaren Entität erfolgen. Somit können die Beziehungen zwischen erzeugten Entitäten beispielsweise über eine grafische Benutzeroberfläche der Anzeigeeinrichtung ausgegeben werden, wobei die Beziehungen beispielsweise nur bei Anwahl der vorgebbaren Entität visualisiert werden.

In einer vorteilhaften Ausgestaltung kann die Anzeigeeinrichtung ein Ausgabeelement umfassen, wobei das Ausgabeelement eine Liste, Tabelle, Datei oder allgemein ein Datenstrom mit den dargestellten Beziehungen zwischen den Entitäten umfassen kann. Besonders vorteilhaft ist es, wenn die Anzeigeeinrichtung eine grafische Benutzeroberfläche aufweist, um die Beziehungen über etwaige Ausgabeelemente darzustellen.

In einer vorteilhaften Ausgestaltung kann die Anzeigeeinrichtung ein Eingabeelement umfassen, wobei das Eingabeelement eine Liste, Tabelle Datei oder allgemein ein Datenstrom umfassen kann, worüber der Messprozess steuerbar ist. Besonders vorteilhaft ist es, wenn die Anzeigeeinrichtung eine grafische Benutzeroberfläche aufweist, um den Messprozess über etwaige Eingabeelemente zu steuern.

In einer vorteilhaften Ausgestaltung kann die Anzeigeeinrichtung ein Beziehungselement umfassen, wobei das Beziehungselement eine Liste, Tabelle, Datei oder allgemein ein Datenstrom umfassen kann, worin die Beziehung zwischen den Entitäten dargestellt ist. Besonders vorteilhaft ist es, wenn die Beziehung zwischen den Entitäten auf einer grafischen Benutzeroberfläche der Anzeigeeinrichtung, insbesondere über einblendbare, grafische Zeigeelemente, dargestellt wird.

In einer vorteilhaften Ausgestaltung können die einblendbaren, grafischen Zeigeelemente Linien, Zeiger und/oder Pfeile umfassen. Unter einem einblendbaren Zeigeelement kann im Rahmen einer vorteilhaften Ausgestaltung auch eine grafische Hervorhebung eines bereits bestehenden Elementes, beispielsweise durch Blinken, Farb- oder Formänderung verstanden. Dabei ist denkbar, dass ein bereits bestehendes Zeigeelement hervorgehoben werden kann und/oder dass bereits erzeugte bzw. dargestellte Entitäten (Objekt- und/oder Kombinationsentitäten) hervorgehoben werden können. Somit ist für einen Benutzer auf besonders einfache, effektive und effiziente Weise eine Möglichkeit geschaffen, vorhandene Beziehungen, insbesondere Berechnungsbeziehungen, auf Richtigkeit bzw. Konsistenz hin zu kontrollieren.

Gemäß der Erfindung visualisieren/zeigen die grafischen Zeigeelemente bei Anwahl einer Objektentität Verbindungen zu den Entitäten, die die angewählte Objektentität verwenden. Somit ist eine effiziente Überprüfung bzw. Kontrolle von etwaigen Beziehungen zwischen den Entitäten realisiert.

Gemäß der Erfindung visualisieren/zeigen die grafischen Zeigeelemente bei Anwahl einer Kombinationsentität Verbindungen zu den Entitäten, die von der angewählten Kombinationsentität als Eingang verwendet werden. Somit ist eine effiziente Überprüfung bzw. Kontrolle von etwaigen Beziehungen zwischen den Entitäten realisiert.

In einer vorteilhaften Ausgestaltung kann eine Gruppierung der Entitäten anhand grafischer Elemente, beispielsweise in Tabellenform oder in Listendarstellung, erfolgen.

In einer vorteilhaften Ausgestaltung können Entitäten, vorzugsweise innerhalb einer Gruppierung, durch Mouseover, durch Anklicken und/oder durch Tastennavigation, vorzugweise per Cursor-Tasten, angewählt werden. Damit ist eine besonders schnelle und effiziente Navigation für den Benutzer realisiert.

In einer vorteilhaften Ausgestaltung kann bei Anwahl einer Entität ein zugehöriges Eigenschaftsfeld angezeigt wird. Über das Eigenschaftsfeld können zweckmäßiger Weise Anpassungen und ggf. weitere Einstellungen vorgenommen werden.

In einer vorteilhaften Ausgestaltung kann das Messmittel zur Messung von Abständen, Positionen, Geometrien, Farben und/oder Temperaturen ausgebildet sein. In vorteilhafter Weise kann das Messmittel des Messsystems ein optisches Messmittel umfassen. Zum Beispiel kann ein Laser-Abstandssensor, ein Laser-Profilsensor und oder eine Kamera als optisches Messmittel vorgesehen sind. Des Weiteren sind als Messmittel für das Messsystem ein Abstandssensor, ein Positionssensor, ein Geometriesensor, ein Farbsensor und/oder ein Temperatursensor denkbar. Somit sind unterschiedlichste messtechnische Erfassungen des Gegenstands realisierbar und im Rahmen von Ausführungsformen der Erfindung durchführbar und darstellbar.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht eine beispielhafte Darstellung von mehreren Dateien in einer Listendarstellung eines Datei-Managers,
- Fig. 2: in einer schematischen Ansicht eine beispielhafte Darstellung von mehreren Ordnern in einer hierarchischen Baumstruktur eines Datei-Managers,
- Fig. 3: in einer schematischen Darstellung ein Beispiel zur Veranschaulichung von Beziehungen zwischen zwei verschiedenen Arten von Entitäten,
- Fig. 4: in einer schematischen Ansicht eine Darstellung von zwei verschiedenen Arten von Entitäten in einer Baumstruktur,
- Fig. 5: in einer schematischen Ansicht die Darstellung gemäß Figur 4, wobei diese um eine Dialoganzeige zur Darstellung weiterer Informationen ergänzt ist,
- Fig. 6: in einer schematischen Ansicht eine grafische Benutzeroberfläche einer Anzeigeeinrichtung gemäß einem Ausführungsbeispiel der Erfindung,
- Fig. 7: in einer schematischen Ansicht ein Ausführungsbeispiel eines erfindungsgemäßen Verfahrens, wobei ein Messprozess zur Vermessung einer Oberfläche eines Gegenstandes durchgeführt und visualisiert wird,
- Fig. 8: in einer schematischen Ansicht eine grafische Benutzeroberfläche einer Anzeigeeinrichtung gemäß einem Ausführungsbeispiel der Erfindung,
- Fig. 9: in einer schematischen Ansicht einen Ablauf eines Messprozesses gemäß einem Ausführungsbeispiel eines erfindungsgemäßen Verfahrens,
- Fig. 10: in einer schematischen Ansicht die grafische Benutzeroberfläche der Anzeigeeinrichtung gemäß einem Ausführungsbeispiel der Erfindung,
- Fig. 11: in einer schematischen Ansicht die grafische Benutzeroberfläche der Anzeigeeinrichtung gemäß einem Ausführungsbeispiel der Erfindung,
- Fig. 12: in einer schematischen Ansicht die grafische Benutzeroberfläche der Anzeigeeinrichtung gemäß einem Ausführungsbeispiel der Erfindung,
- Fig. 13: in einer schematischen Ansicht die grafische Benutzeroberfläche der Anzeigeeinrichtung gemäß einem Ausführungsbeispiel der Erfindung,
- Fig. 14: in einer schematischen Ansicht einen Ablauf eines Messprozesses gemäß einem Ausführungsbeispiel eines erfindungsgemäßen Verfahrens,
- Fig. 15: in einer schematischen Ansicht die grafische Benutzeroberfläche der Anzeigeeinrichtung gemäß einem Ausführungsbeispiel der Erfindung, und
- Fig. 16: in einer schematischen Ansicht die grafische Benutzeroberfläche der Anzeigeeinrichtung gemäß einem Ausführungsbeispiel der Erfindung.

Fig. 1 zeigt in einer schematischen Ansicht eine beispielhafte Darstellung von mehreren Dateien in einer Listendarstellung eines Datei-Managers. Viele Softwarepakete stehen vor der Aufgabe, die von einer Applikation verwalteten Entitäten für einen Benutzer sinnvoll am Bildschirm darzustellen. Für einfache Anwendungen reicht eine Listendarstellung. Beispielsweise kann auf die Dateianzeige im Windows Explorer verwiesen werden, wonach n Dateien eines Ordners im rechten Teil eines Fensters als Liste dargestellt werden (vgl. Fig. 1).

Nachteil an dieser Darstellung gemäß Fig. 1 ist, dass keine Abhängigkeiten oder Bezüge zwischen den Entitäten dargestellt werden können. Alle Dateien im Fenster sind voneinander unabhängig.

Um beim Beispiel des Explorers zu bleiben: die Abhängigkeiten zwischen den Ordnern eines Laufwerks können hierarchisch als Baumstruktur im linken Teil des dargestellten Fensters angezeigt werden. Fig. 2 zeigt dazu in einer schematischen Ansicht eine beispielhafte Darstellung von mehreren Ordnern in einer hierarchischen Baumstruktur eines Datei-Managers.

Derartige Darstellungen in Form einer hierarchischen Baumstruktur sind gut geeignet, wenn die darzustellenden Entitäten in strengen 1:n Abhängigkeiten zueinander stehen:
- 1 Ordner kann n Unterordner haben
- 1 Ordner kann n Dateien enthalten

Aber:
- 1 Datei kann nur in einem Ordner sein
- 1 Unterordner hat genau einen Überordner
- Dateien haben keine Beziehungen zueinander

Sind diese 1:n Abhängigkeiten gegeben, kann durch Kombination der Baumstruktur auf der linken Seite und der Liste auf der rechten Seite eine übersichtliche und intuitive Darstellung der Entitäten erreicht werden.

Durch die weite Verbreitung der Baum- bzw. Listendarstellung als Standard zur Darstellung der Inhalte von Laufwerken haben diese Konzepte auch Einzug in andere Softwarepakete erhalten. Solange die oben genannten Bedingungen hinsichtlich der 1:n Abhängigkeit erfüllt sind, ist dies eine geeignete Wahl.

Allerdings gibt es Softwarepakete, bei denen zwischen den Entitäten zusätzliche Beziehungen zu verwalten sind.

Im Rahmen eines Ausführungsbeispiels der Erfindung sind beispielsweise zwei verschiedene Arten von Entitäten zu berücksichtigen, wobei zwischen den Entitäten zusätzliche Beziehungen zu verwalten sind. Es handelt sich damit um n:m Abhängigkeiten zwischen zwei verschiedenen Arten von Entitäten, nämlich "Objekte" als Objektentitäten und "Kombinationen" als Kombinationsentitäten:
- Kombinationen können mehrere Objekte als Eingänge verwenden;
- Objekte können als Eingänge für mehrere Kombinationen oder andere Objekte dienen;
- Kombinationen können als Eingänge für andere Kombinationen dienen;

Im Rahmen eines Ausführungsbeispiels der Erfindung können Gegenstände mit optischen Messmitteln vermessen werden, um daraus Abstände, Winkel, Schnitte etc. zu berechnen.

Beispiele für Objekte für den Anwendungsfall in der Messtechnik können sein:
- Ebene
- Kugel
- Linie
- Schwerpunkt

Beispiele für Kombinationen für den Anwendungsfall in der Messtechnik können sein:
- Winkel
- Abstand
- Schnitt

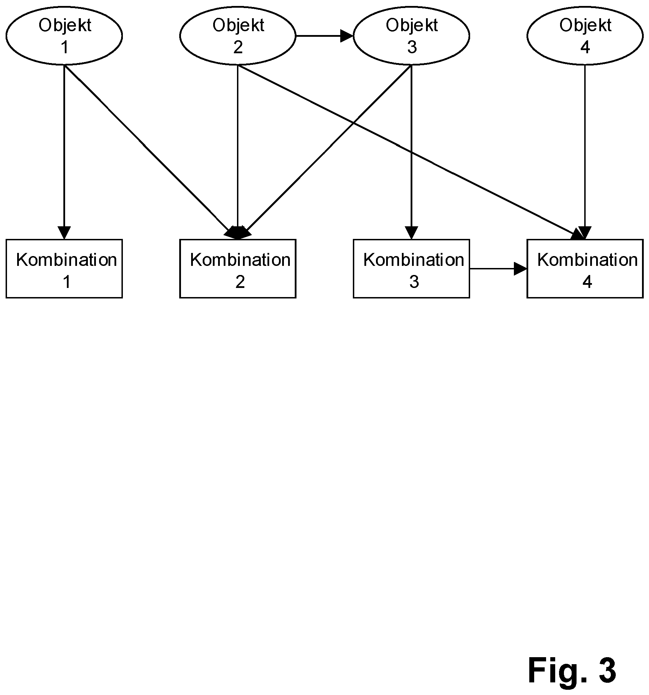

Fig. 3 zeigt in einer schematischen Darstellung ein Beispiel zur Veranschaulichung von Beziehungen zwischen zwei verschiedenen Arten von Entitäten, den Objekten und den Kombinationen. Für den Bediener/Benutzer ist es wichtig, schnell die entsprechenden Abhängigkeiten zwischen den Objekten erfassen und auf Richtigkeit/Konsistenz kontrollieren zu können. Dazu ist eine geeignete Darstellung notwendig. Wie aus dem durch Fig. 3 dargestellten Diagramm ersichtlich ist, ist es allgemein herausfordernd, Beziehungen zwischen zwei Entitätstypen anzuzeigen. In komplexeren Szenarien wird das schnell unübersichtlich.

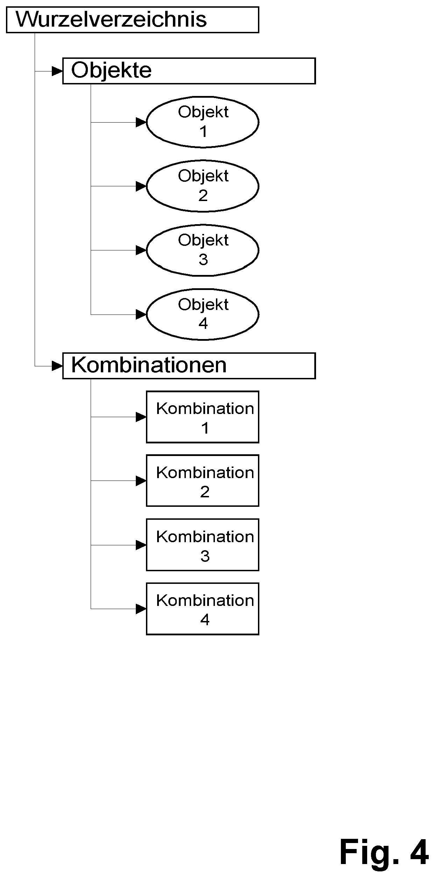

Ein bekannter Ansatz ist die Anzeige der beiden Entitäten in zwei Unterordnern einer Baumstruktur, wie dies in Fig. 4 veranschaulicht ist. Die Darstellung der Beziehungen zwischen den Objekten ist in der Baumstruktur gemäß Fig. 4 allerdings nicht möglich.

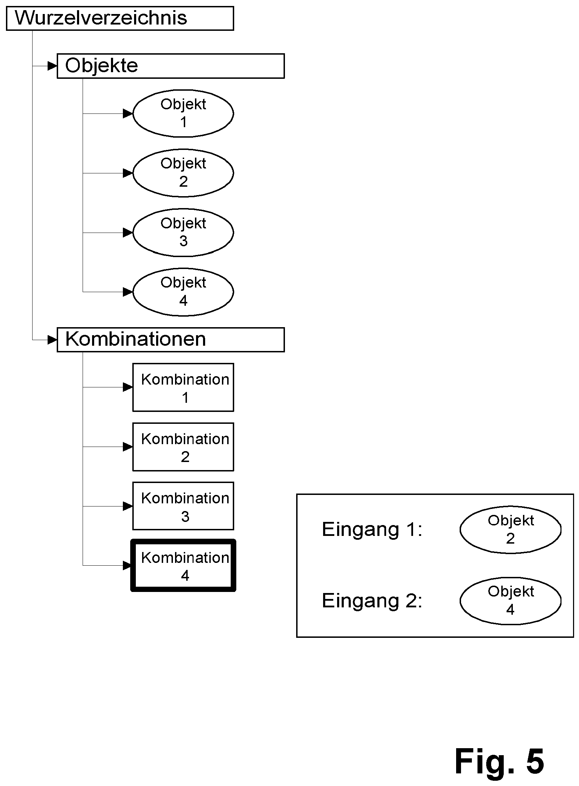

Daher ist denkbar, beim Anwählen einer Entität einen Dialog mit der Übersicht der verwendeten Eingangs-Objekte anzuzeigen. Dies ist in Fig. 5 veranschaulicht. Fig. 5 zeigt in einer schematischen Ansicht die Darstellung gemäß Fig. 4, wobei diese um eine Dialoganzeige zur Darstellung weiterer Informationen ergänzt ist.

Der Ansatz gemäß Fig. 4 hat den Nachteil, dass eine Prüfung der Verbindung zwischen den Entitäten nur über deren Namen erfolgen kann. Für eine Konsistenzprüfung muss sorgfältig darauf geachtet werden, jeder Entität einen eindeutigen und aussagekräftigen Namen zu geben. Ein vollständiger Konsistenzcheck erfordert, dass nacheinander die jeweiligen Dialoge für alle Entitäten geöffnet werden. Dies ist ziemlich aufwändig und umständlich.

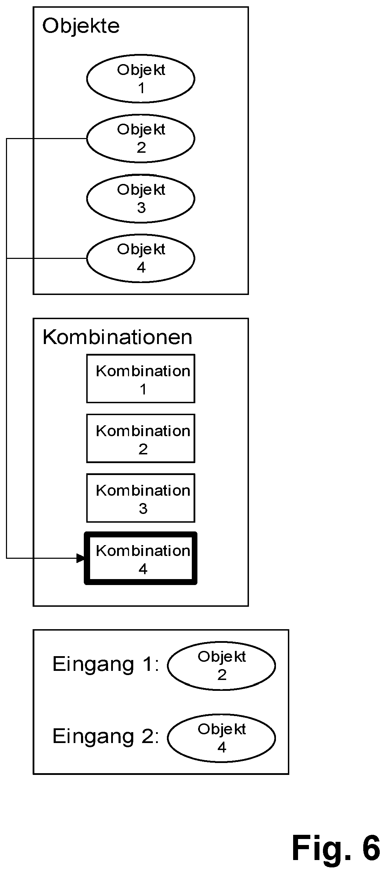

Fig. 6 zeigt in einer schematischen Ansicht eine grafische Benutzeroberfläche einer Anzeigeeinrichtung gemäß einem Ausführungsbeispiel der Erfindung. Demnach wird eine effektive Ablaufsteuerung für den Messprozess über ein Computerprogramm ermöglicht, wobei eine Visualisierung der Zuordnung von Entitäten des Computerprogrammes erfolgt, die in einer n:m-Verbindung zueinanderstehen können. Um dem Benutzer in dieser Anwendung den Überblick behalten zu lassen, sind folgende Implementierungen gewählt worden:
- Objekte werden in einer einfachen Liste angezeigt;
- Kombinationen werden in einer zweiten Liste angezeigt;
- Beziehungen zwischen den beiden Typen von Entitäten (Objekte, Kombinationen) werden über grafische Zeigeelemente (z.B. Pfeile, Linien oder Zeiger) angezeigt, die nicht ständig angezeigt werden, sondern nur bei Anwahl (Mouseover, oder Anklicken) einer Entität;
- Bei Auswahl eines Objekts: grafische Zeigeelemente (Pfeile) werden eingeblendet, um Verbindungen zu den Kombinationen anzuzeigen, in welchen das Objekt verwendet wird;
- Bei Auswahl einer Kombination: grafische Zeigeelemente (Pfeile) werden eingeblendet, um Verbindungen zu den Objekten bzw. Kombinationen anzuzeigen, die als Eingänge von der ausgewählten Kombination benutzt werden;
- Zusätzlich wird jeweils das Eigenschaftenfeld für das ausgewählte Element bzw. die ausgewählte Entität angezeigt, in welchem ggf. Anpassungen vorgenommen werden können

Dies bietet mehrere Vorteile:
- Es werden immer nur die Verbindungen für eine Entität angezeigt, die gerade betrachtet (Mouseover) bzw. ausgewählt (Anklicken) wird. In dem Beispiel gemäß Fig. 6 betrifft diese die Kombination 4, welche das Objekt 2 und das Objekt 4 als Eingänge aufweist. Damit bleibt die Übersichtlichkeit erhalten und wird für den Benutzer eine effiziente Überprüfung des Messprozesses möglich.
- Die Listen der Entitäten kann per Cursor-Tasten durchgegangen werden. Dadurch ist eine schnelle vollständige Prüfung möglich.
- Neben den Namen der Entitäten wird auch deren Position in der jeweiligen Liste bei der Verbindung angezeigt (z.B. Eingang 1, Eingang 2). Dies erlaubt auch bei nicht aussagekräftigen Namen eine effiziente Überprüfung durch den Benutzer.

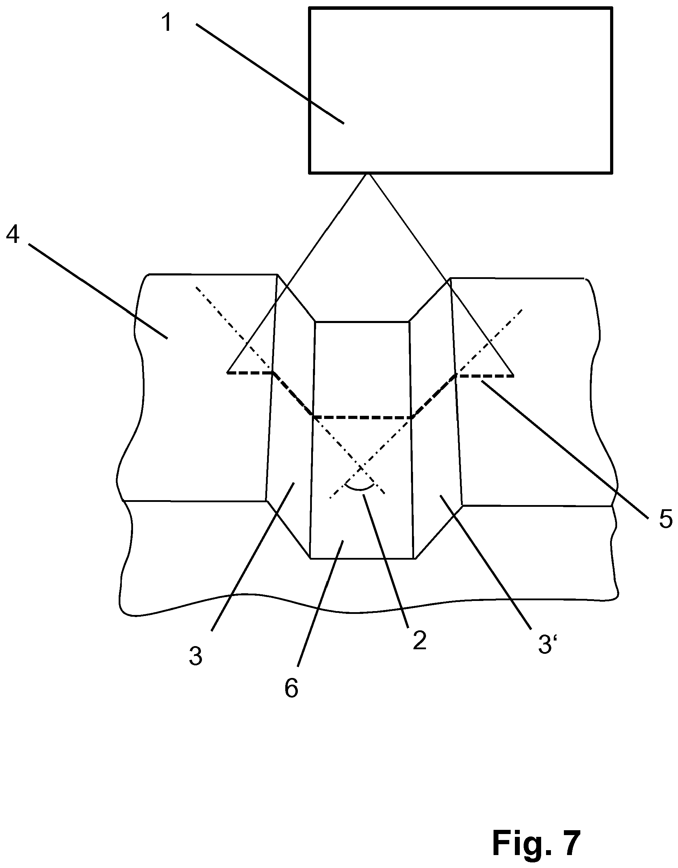

Fig. 7 zeigt in einer schematischen Ansicht ein Ausführungsbeispiel eines erfindungsgemäßen Verfahrens, wobei ein Messprozess zur Vermessung einer Oberfläche eines Gegenstandes durchgeführt und visualisiert wird. Konkret wird ein Ausführungsbeispiel der Erfindung anhand eines Beispiels aus der Messtechnik beschrieben: Mit einem Laser-Profilsensor (1) soll der Winkel (2) zwischen zwei Flächen (3, 3') auf der Oberfläche eines Gegenstandes (4) vermessen werden. Der Laser-Profilsensor (1) erzeugt eine Laserlinie (5), die auf den Gegenstand (4) projiziert wird. Die Laserlinie (5) wird über eine Empfangsoptik auf einen Bildempfänger (zum Beispiel eine CCD-Kamera) im Profilsensor (1) abgebildet. Wird der Laser-Profilsensor (1) über den Gegenstand (4) bewegt, kann durch die Aneinanderreihung der gemessenen Profile ein Abbild der Oberfläche erzeugt werden. In dem Beispiel gemäß Fig. 7 ist dies eine V-förmige Nut (6) in einem Werkstück. Der Winkel (2) zwischen den beiden Flanken (3, 3') der Nut (6) soll bestimmt werden.

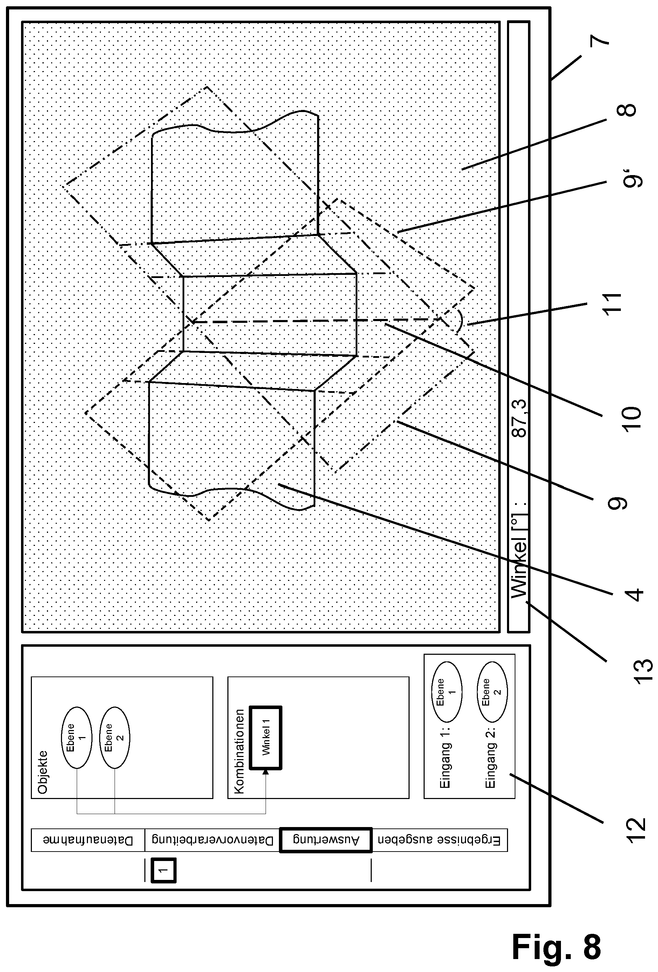

Fig. 8 zeigt in einer schematischen Ansicht eine grafische Benutzeroberfläche einer Anzeigeeinrichtung gemäß einem Ausführungsbeispiel der Erfindung. Im Konkreten zeigt Fig. 8 eine grafische Benutzeroberfläche eines Softwarepaketes zur Durchführung eines Verfahrens gemäß einem Ausführungsbeispiel der Erfindung, das für die Visualisierung und Auswertung von Messdaten verwendet wird. In dem Hauptfenster (7) des Programmes befindet sich zur Visualisierung eine bildliche Darstellung des zu vermessenden Gegenstandes (4) in einer Visulisierungsbox (8). Aus den Messwerten (die Punktewolke ist aus Gründen der Übersichtlichkeit nicht dargestellt) werden die Ebenen (9, 9') generiert, die die beiden Flanken (3,3') der Nut (6) im Werkstück repräsentieren. In der Schnittgeraden (10) zwischen den beiden Ebenen (9, 9') wird der Winkel (11) zwischen den Ebenen gezeigt, der den Winkel (2) zwischen den beiden Flanken repräsentiert.

Weiterhin ist in Fig. 8 eine Menübox (12) gezeigt, die den Ablauf des Messprozesses steuert und - am Beispiel einer Auswertungsphase - die Objekte, deren Kombinationen sowie deren Eigenschaften zeigt.

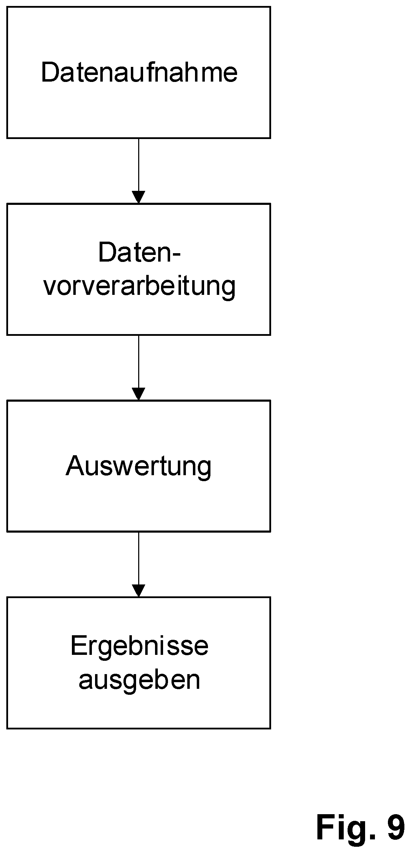

Fig. 9 zeigt in einer schematischen Ansicht einen Ablauf eines Messprozesses gemäß einem Ausführungsbeispiel eines erfindungsgemäßen Verfahrens. Der Messprozess im Rahmen des Ausführungsbeispiels kann zunächst ganz allgemein vier Prozessphasen umfassen: Datenaufnahme, Datenvorverarbeitung, Auswertung und Ergebnisausgabe.

Im Rahmen der Datenaufnahme wird zunächst mit einem Computerprogramm eine Verbindung zu einem optischen Messmittel bzw. einem Sensor über eine geeignete Schnittstelle hergestellt und - nach Einstellung der Messparameter - Messungen durchgeführt. Die vom Sensor erzeugten Messwerte (das sind bei 3D-Sensoren in der Regel Punktewolken, d.h. Messpunkte in einem geeigneten Koordinatensystem) können dann in das Computerprogramm eingelesen werden.

In einer Phase der Datenvorverarbeitung können die (ursprünglichen oder ggf. bereits im Sensor vorverarbeiteten) Messwerte aufbereitet werden. Dies kann beispielsweise die Korrektur der Einbaulage oder die (dynamische) Ausrichtung des Messobjektes sein (dynamische Bauteilausrichtung). Denkbar ist hier beispielsweise eine Transformation des Koordinatensystems des Messobjektes oder des Sensors in ein anderes, zum Beispiels in ein globales Koordinatensystem. Die Datenvorverarbeitung kann auch eine Filterung der Messwerte und/oder die Auswahl der gewünschten Messwerte (region of interest) umfassen.

In der nachfolgengen Phase der Auswertung können dann Objekte (wie beispielsweise Kanten, Ebenen, Kugeln, Kreise, etc.) bestimmt werden sowie Kombinationen dieser Objekte, nämlich die gewünschten Auswerteoperationen (zum Beispiel Abstände, Winkel, Schnitte etc.).

Schließlich werden die Ergebnisse der Auswerteoperationen als Ergebnisse ausgegeben (Messwerte, Grenzwerte, etc).

Um die Durchführung des Messprozesses effizient und schnell dem Bediener zu vermitteln, wird dieser Ablauf durch das Computerprogramm in der Menübox (12) auf der grafischen Benutzeroberfläche der Anzeigeeinrichtung übersichtlich dargestellt. Je nach ausgewähltem Schritt im Ablauf des Messprozesses können die angezeigten Auswahllisten und Eigenschaftsfelder angepasst werden.

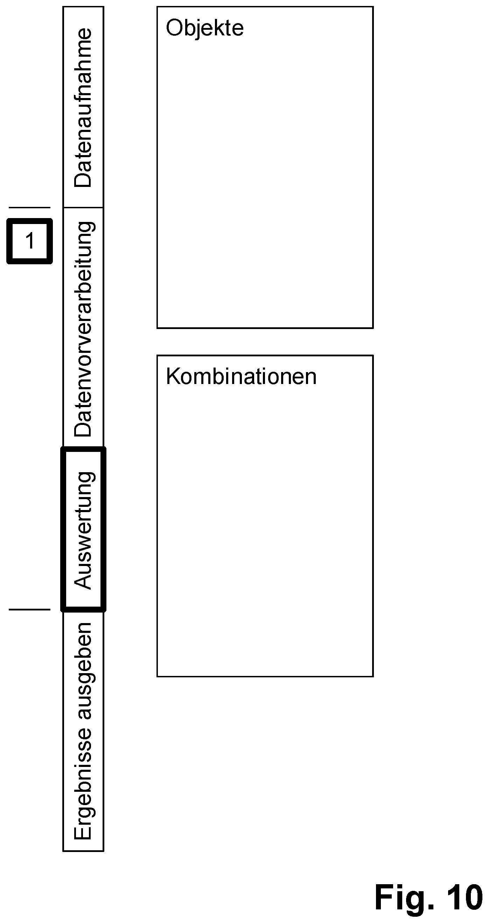

Im Rahmen eines beispielhaften Ablaufs für eine Auswertungsphase stellt sich dies wie folgt dar:
Zu Beginn sind die Bereiche in der Listendarstellung für Objekte und Kombinationen leer, wie dies in Fig. 10 in einer schematischen Ansicht für die grafische Benutzeroberfläche dargestellt ist.

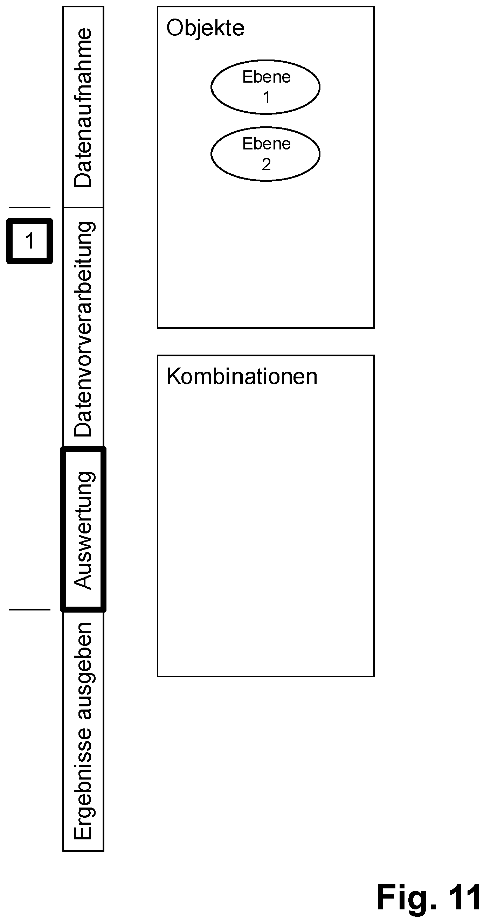

Wie in Fig. 11 dargestellt, werden dann zunächst die beiden Objekte ("Ebene 1" und "Ebene 2" als Objektentität in Fig. 11) für die Extraktion der Ebenen angelegt und entsprechend parametriert.

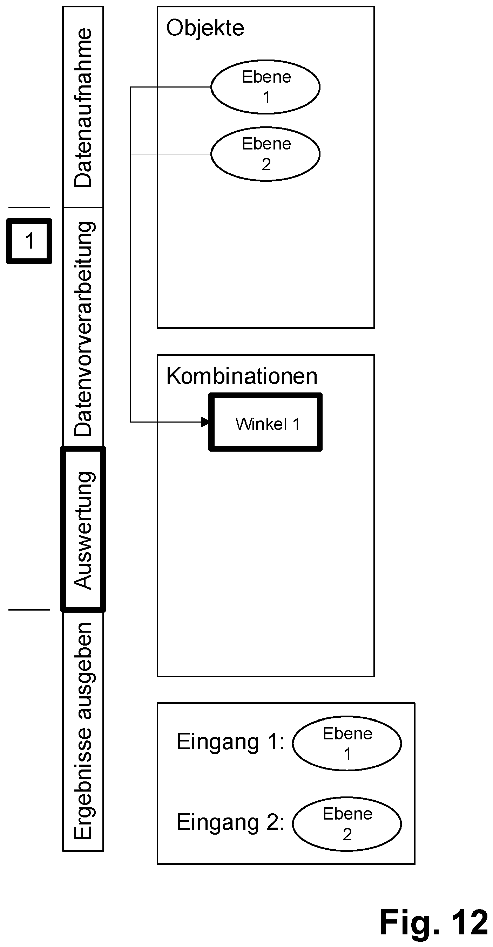

Dann wird eine Kombination "Winkel" angelegt und mit den beiden zuvor erstellten Objekten "Ebene 1" und "Ebene 2" als Eingänge verknüpft (vgl. Fig. 12).

Hiermit ist die Einrichtung abgeschlossen und der Winkel zwischen den Ebenen kann berechnet und ausgegeben werden.

Wird nun konkret die Kombination "Winkel 1" angewählt (z.B. durch Mouseover oder Anklicken), werden Zeigeelemente eingeblendet, die die ausgewählten Eingänge (also die Objekte) für die Kombination anzeigen. Zusätzlich werden noch die Eigenschaften der Objekte in einer separaten Box angezeigt. "Eingang 1" entspricht dabei der "Ebene 1" und "Eingang 2" der "Ebene 2", die in die Berechnung des Winkels "Winkel 1" (also der Kombination von Objekt 1und Objekt 2) eingehen.

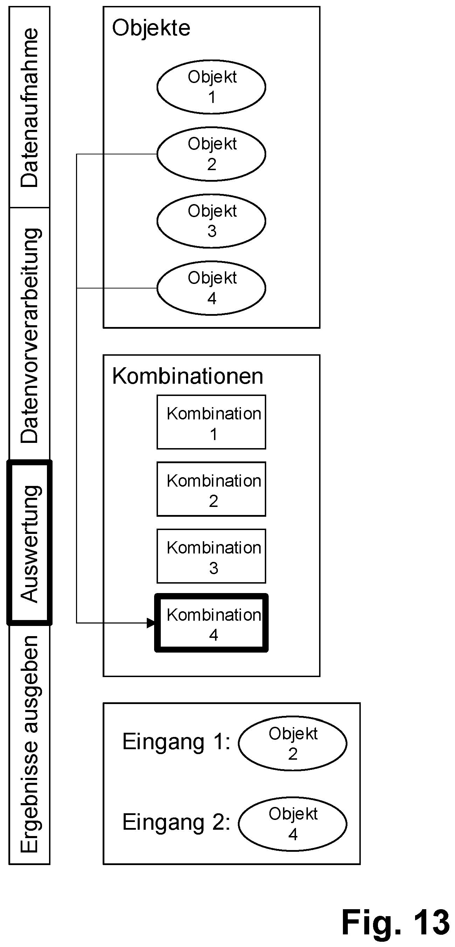

Fig. 13 zeigt in einer schematischen Ansicht eine grafische Benutzeroberfläche der Anzeigeeinrichtung gemäß einem Ausführungsbeispiel der Erfindung, wobei insbesondere bei komplexeren Auswertungen mit mehreren Kombinationen bei Anwahl der jeweiligen Kombination die jeweils zugehörigen Objekte und deren Eigenschaften dargestellt werden.

Als Regel ist hier festgelegt worden, dass in jedem Schritt bzw. in jeder Phase des Messprozesses nur Ergebnisse von Berechnungen verwendet werden können, die oberhalb des aktuellen Schritts bzw. vor der aktuellen Phase liegen. Kombinationen können nur auf oberhalb liegende bzw. bereits erzeugte Objekte und Kombinationen zugreifen.

Des Weiteren ist zur Unterstützung von schnellen Konsistenzchecks vorgesehen, dass bei Anwahl eines Objekts bzw. einer Kombination jeweils sofort in einer Ergebnisbox eine Rückmeldung über die entsprechenden Eingangsdaten und das jeweilige Zwischenergebnis gegeben wird. In dem Beispiel gemäß Fig. 8 wird dazu in der Ergebnisbox (13) der Wert für den Winkel (11) ausgegeben. Bei komplexeren Berechnungen können hier auch mehrere Zwischenschritte und Ergebnisse angezeigt werden.

Prinzipiell können im Ablauf nur solche Objekte bzw. Kombinationen für andere Kombinationen als Eingänge verwendet werden, deren Ergebnisse im aktuellen Messzyklus bereits berechnet worden sind. Demnach ist vorgesehen, dass ein strikter Ablauf ohne Rückkopplungen eingehalten werden muss.

Der strikte Ablauf hat zur Folge, dass die Schritte bzw. Phasen "Datenvorverarbeitung" und "Auswertung" immer in dieser Reihenfolge ausgeführt werden. Um nun trotzdem auch Vorverarbeitungsmodule mit Daten eines Objekts als Eingang zu erlauben, wird die Möglichkeit implementiert, dass mehrere Blöcke von Vorverarbeitung/Auswertung verwaltet werden können. Damit kann der Bediener beispielsweise die Ausrichtung einer Punktewolke an einer zuvor aus den Daten extrahierten Ebene einrichten. Außerdem lässt sich dadurch die Aufgabenstellung in handhabbare Blöcke zerteilen.

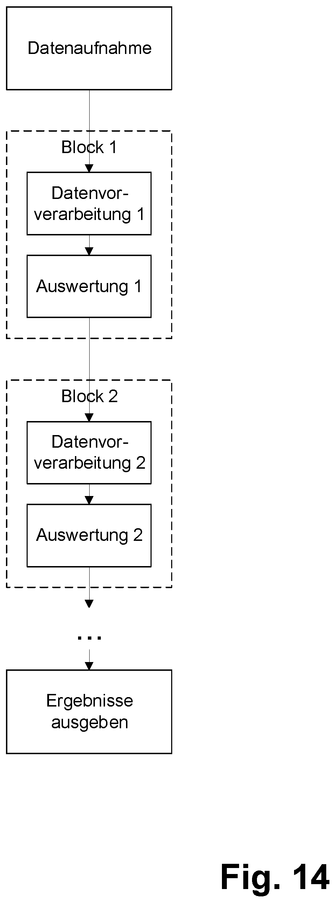

Beispielsweise können weitere Blöcke erzeugt werden, die ebenfalls die Schritte/Phasen "Datenverarbeitung" und "Auswertung" enthalten. Hierzu sei auf Fig. 14 verwiesen, die in einer schematischen Ansicht einen Ablauf eines Messprozesses gemäß einem Ausführungsbeispiel eines erfindungsgemäßen Verfahrens veranschaulicht.

Durch das Erzeugen eines zweiten Blocks, der ebenfalls die Schritte/Phasen "Datenverarbeitung" und "Auswertung" enthält, kann somit im Bereich im Bereich "Datenvorverarbeitung 2" auf Objekte zugegriffen werden, die im Bereich "Auswertung 1" aus den Daten extrahiert worden sind.

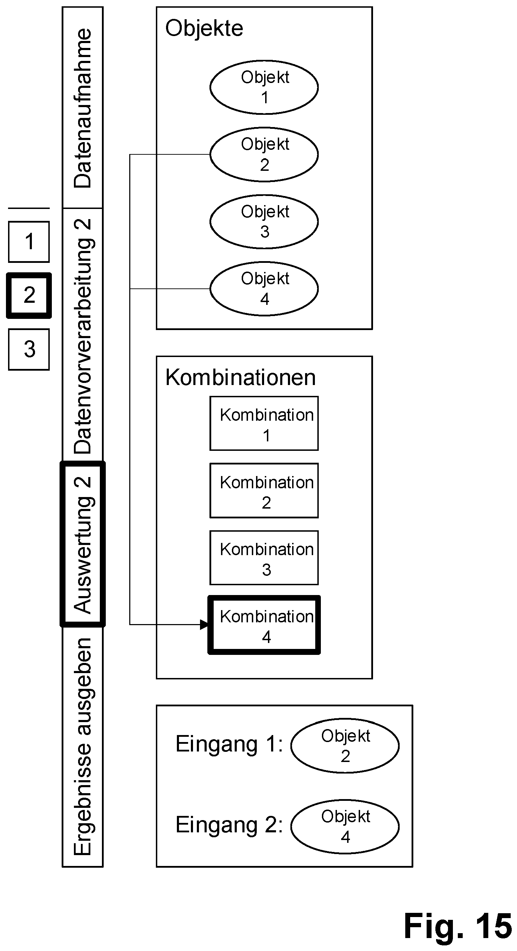

Dies wird in der Menübox (12) so dargestellt, dass die Blöcke neben dem Ablaufschema angezeigt werden, wobei der jeweils aktive Block hervorgehoben wird (vgl. Fig. 15).

Ein Zugriff auf Objekte bzw. Kombinationen aus vorherigen Blöcken ist damit möglich und wird durch einen entsprechenden Verweis auf diesen dargestellt. Im Beispiel gemäß Fig. 14 bzw. gemäß Fig. 15 wird im "Block 2" der "Vorverarbeitung 2" auf Ergebnisse aus dem "Block 1" zugegriffen.

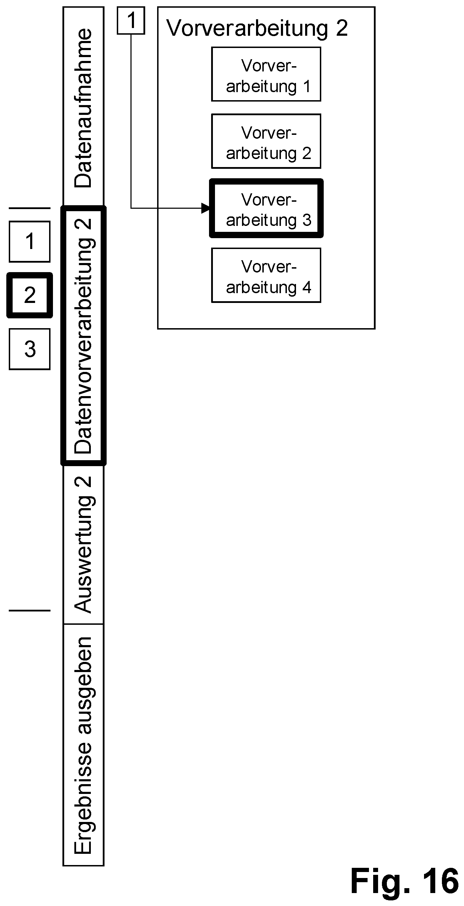

Dies kann im Rahmen eines Ausführungsbeispiels auf der grafischen Benutzerfläche dem Bediener angezeigt werden, indem ein Zeigeelement auf ein Symbol verweist, das den Block 1 repräsentiert. In Fig. 16 zeigt dazu das Zeigeelement von der "Vorverarbeitung 3" auf den Kasten mit der 1, das den Block 1 repräsentiert.

Durch einen Klick auf die angezeigte Verbindung zum übergeordneten Block "1" wird dieser unmittelbar angewählt und die Anzeige wechselt zu Block 1, in dem dann die ausgewählte Entität angezeigt wird. Demnach wird im Block 2 (Vorverarbeitung 2) auf Objekte aus Block 1 zugegriffen, d.h. es werden Objekte aus Block 1 in Block 2 zur weiteren Verarbeitung verwendet.

Hinsichtlich weiterer vorteilhafter Ausgestaltungen des erfindungsgemäßen Verfahrens und des erfindungsgemäßen Messsystems wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Verfahrens und des erfindungsgemäßen Messsystems lediglich zur Erörterung der beanspruchten Lehre dienen, diese jedoch nicht auf die Ausführungsbeispiele einschränken.

### Bezugszeichenliste

- 1: Laser-Profilsensor
- 2: Winkel
- 3, 3': Fläche
- 4: Gegenstand
- 5: Laserlinie
- 6: V-förmige Nut
- 7: Hauptfenster
- 8: Visualisierungsbox
- 9: Ebene
- 10: Schnittgerade
- 11: Winkel
- 12: Menübox
- 13: Ergebnisbox

## Patentansprüche

1. Verfahren zur Durchführung und Darstellung eines Messprozesses mittels eines Messsystems, wobei das Messsystem mindestens eine Recheneinrichtung, mindestens eine Anzeigeeinrichtung und mindestens ein Messmittel zur messtechnischen Erfassung eines Gegenstands umfasst, wobei der Messprozess über die Anzeigeeinrichtung steuerbar ist, umfassend folgende Verfahrensschritte:
- Aufnehmen von Messwertdaten des Gegenstands, die mit dem Messmittel erzeugt werden;
- Erzeugen von Objektentitäten als Entitäten in Bezug auf den messtechnisch zu erfassenden Gegenstand;
- Erzeugen von Kombinationsentitäten als Entitäten in Bezug auf den messtechnisch zu erfassenden Gegenstand, wobei die Kombinationsentitäten Auswerteoperationen repräsentieren, wobei zur Bestimmung der Auswerteoperationen mehrere Entitäten kombiniert werden;
- Ausgabe von Beziehungen zwischen den erzeugten Entitäten, wobei die Beziehungen bei Anwahl einer vorgebbaren Entität mittels einblendbarer, grafischer Zeigeelemente dargestellt werden,
- Anwählen einer Kombinationsentität, Berechnen und Ausgeben der Ergebnissen der entsprechenden Auswerteoperationen anhand der aufgenommen Messwertdaten;
wobei die Objektentitäten in einer ersten Gruppierung über die Anzeigeeinrichtung dargestellt werden und wobei die Kombinationsentitäten in einer zweiten Gruppierung über die Anzeigeeinrichtung dargestellt werden,
wobei bei Anwahl einer Objektentität die grafischen Zeigeelemente Verbindungen zu den Entitäten visualisieren, die die angewählte Objektentität verwenden, und
wobei bei Anwahl einer Kombinationsentität die grafischen Zeigeelemente Verbindungen zu den Entitäten visualisieren, die von der angewählten Kombinationsentität als Eingang verwendet werden.

2. Verfahren nach Anspruch 1, **dadurch gekennzeichnet, dass** eine Kombinationsentität auf mehreren Entitäten derart basiert, dass die Kombinationsentität mehrere Entitäten als Eingangsentitäten verwendet, wobei eine Eingangsentität eine Objektentität oder eine Kombinationsentität ist.

3. Verfahren nach einem der Ansprüche 1 oder 2, **dadurch gekennzeichnet, dass** als Objektentitäten Kanten, Ebenen, Kreise, Kugeln, Linien und/oder Schwerpunkte in Bezug auf den zu vermessenden Gegenstand bestimmt werden.

4. Verfahren nach einem der Ansprüche 1 bis 3, **dadurch gekennzeichnet, dass** als Kombinationsentitäten Winkel, Abstände und/oder Schnitte in Bezug auf den zu vermessenden Gegenstand bestimmt werden.

5. Verfahren nach einem der Ansprüche 1 bis 4, **dadurch gekennzeichnet, dass** Beziehungen für eine vorgebbare Entität dargestellt werden, sofern die vorgebbare Entität angewählt wird.

6. Verfahren nach einem der Ansprüche 1 bis 5, **dadurch gekennzeichnet, dass** die grafischen Zeigeelemente Linien, Zeiger und/oder Pfeile umfassen.

7. Verfahren nach einem der Ansprüche 1 bis 6, **dadurch gekennzeichnet, dass** Entitäten durch Mouseover, durch Anklicken und/oder durch Tastennavigation, vorzugweise per Cursor-Tasten, angewählt werden.

8. Verfahren nach einem der Ansprüche 1 bis 7, **dadurch gekennzeichnet, dass** bei Anwahl einer Entität ein zugehöriges Eigenschaftsfeld angezeigt wird.

9. Verfahren nach einem der Ansprüche 1 bis 8, **dadurch gekennzeichnet, dass** das Messmittel zur Messung von Abständen, Positionen, Geometrien, Farben und/oder Temperaturen ausgebildet ist, und/oder
dass das Messmittel ein optisches Messmittel, einen Laser-Abstandssensor, einen Laser-Profilsensor, eine Kamera, einen Abstandssensor, einen Positionssensor, einen Geometriesensor, einen Farbsensor und/oder einen Temperatursensor umfasst.

10. Messsystem zur Durchführung und Darstellung eines Messprozesses, nämlich zur Durchführung eines Verfahrens nach einem der Ansprüche 1 bis 9, wobei das Messsystem mindestens eine Recheneinrichtung, mindestens eine Anzeigeeinrichtung und mindestens ein Messmittel zur messtechnischen Erfassung eines Gegenstands umfasst, wobei der Messprozess über die Anzeigeeinrichtung steuerbar ist und wobei das Messsystem derart ausgebildet ist,
dass Messwertdaten des Gegenstands, die mit dem Messmittel erzeugt werden, aufnehmbar sind,
dass Objektentitäten als Entitäten in Bezug auf den messtechnisch zu erfassenden Gegenstand erzeugbar sind,
dass Kombinationsentitäten als Entitäten in Bezug auf den messtechnisch zu erfassenden Gegenstand erzeugbar sind, wobei die Kombinationsentitäten Auswerteoperationen repräsentieren, wobei zur Bestimmung der Auswerteoperationen mehrere Entitäten kombinierbar sind,
dass Beziehungen zwischen den erzeugten Entitäten über die Anzeigeeinrichtung ausgebbar sind, wobei die Beziehungen für eine vorgebbare Entität mittels einblendbarer, grafischer Zeigeelemente darstellbar sind,
dass eine Kombinationsentität anwählbar ist, und dass Ergebnisse der entsprechenden Auswerteoperationen anhand der aufgenommen Messwertdaten berechenbar und ausgebbar sind;
wobei die Objektentitäten in einer ersten Gruppierung über die Anzeigeeinrichtung darstellbar sind und wobei die Kombinationsentitäten in einer zweiten Gruppierung über die Anzeigeeinrichtung darstellbar sind,
wobei mittels der grafischen Zeigeelemente bei Anwahl einer Objektentität Verbindungen zu den Entitäten visualisierbar sind, die die angewählte Objektentität verwenden, und
wobei mittels der grafischen Zeigeelemente bei Anwahl einer Kombinationsentität Verbindungen zu den Entitäten visualisierbar sind, die von der angewählten Kombinationsentität als Eingang verwendet werden.

11. Computerprogrammprodukt mit Programmcode, der auf einem maschinenlesbaren Träger gespeichert ist und ein Verfahren zur Durchführung und Darstellung eines Messprozesses nach einem der Ansprüche 1 bis 9 mittels eines Messsystems nach dem Anspruch 10 bereitstellt und/oder ausführt.

## Claims

1. A method for performing and displaying a measuring process by means of a measuring system, wherein the measuring system comprises at least one computing device, at least one display device, and at least one measuring means for metrologically capturing an article, wherein the measuring process is controllable via the display device, comprising the following method steps:
- recording measured value data for the article that are generated using the measuring means;
- generating object entities as entities with respect to the article to be metrologically captured;
- generating combination entities as entities with respect to the article to be metrologically captured, wherein the combination entities represent evaluation operations, wherein a plurality of entities are combined to determine the evaluation operations;
- outputting relationships between the generated entities, wherein the relationships are displayed by means of insertable graphical pointing elements when a specifiable entity is selected;
- selecting a combination entity, calculating and outputting the results of the corresponding evaluation operations on the basis of the recorded measured value data;
wherein the object entities are displayed in a first grouping via the display device, and wherein the combination entities are displayed in a second grouping via the display device,
wherein, when an object entity is selected, the graphical pointing elements visualize links to the entities that use the selected object entity, and wherein, when a combination entity is selected, the graphical pointing elements visualize links to the entities used as an input by the selected combination entity.

2. The method according to claim 1, **characterized in that** a combination entity is based on a plurality of entities such that the combination entity uses a plurality of entities as input entities, an input entity being an object entity or a combination entity.

3. The method according to any of claims 1 or 2, **characterized in that** edges, planes, circles, spheres, lines, and/or centroids are determined as object entities with respect to the article to be measured.

4. The method according to any of claims 1 to 3, **characterized in that** angles, distances, and/or sections are determined as combination entities with respect to the article to be measured.

5. The method according to any of claims 1 to 4, **characterized in that** relationships are displayed for a specifiable entity provided that the specifiable entity is selected.

6. The method according to any of claims 1 to 5, **characterized in that** the graphical pointing elements comprise lines, pointers, and/or arrows.

7. The method according to any of claims 1 to 6, **characterized in that** entities are selected by mouseover, by clicking, and/or by key navigation, preferably by cursor keys.

8. The method according to any of claims 1 to 7, **characterized in that** an associated property field is displayed when an entity is selected.

9. The method according to any of claims 1 to 8, **characterized in that** the measuring means is designed for measuring distances, positions, geometries, colors, and/or temperatures, and/or
**in that** the measuring means comprises an optical measuring means, a laser distance sensor, a laser profile sensor, a camera, a distance sensor, a position sensor, a geometry sensor, a color sensor, and/or a temperature sensor.

10. A measuring system for performing and displaying a measuring process, namely for performing a method according to any of claims 1 to 9, wherein the measuring system comprises at least one computing device, at least one display device, and at least one measuring means for metrologically capturing an article, wherein the measuring process is controllable via the display device, and wherein the measuring system is designed such that:
measured value data for the article that are generated using the measuring means can be recorded,
object entities can be generated as entities with respect to the article to be metrologically captured,
combination entities can be generated as entities with respect to the article to be metrologically captured, wherein the combination entities represent evaluation operations, wherein a plurality of entities can be combined to determine the evaluation operations,
relationships between the generated entities can be output via the display device, wherein the relationships can be displayed for a specifiable entity by means of insertable graphical pointing elements, a combination entity can be selected, and results of the corresponding evaluation operations can be calculated and output on the basis of the recorded measured value data;
wherein the object entities can be displayed in a first grouping via the display device, and wherein the combination entities can be displayed in a second grouping via the display device,
wherein, when an object entity is selected, links to the entities that use the selected object entity can be visualized by means of the graphical pointing elements,
wherein, when a combination entity is selected, links to the entities used as an input by the selected combination entity can be visualized by means of the graphical pointing elements.

11. A computer program product comprising program code which is stored on a machine-readable medium and provides and/or executes a method for performing and displaying a measuring process according to any of claims 1 to 9 by means of a measuring system according to claim 10.

## Revendications

1. Procédé de mise en œuvre et de représentation d'un processus de mesure au moyen d'un système de mesure, dans lequel le système de mesure comprend au moins un dispositif informatique, au moins un dispositif d'affichage et au moins un moyen de mesure pour la capture métrologique d'un objet, dans lequel le processus de mesure peut être commandé par l'intermédiaire du dispositif d'affichage, comprenant les étapes de procédé suivantes :
- acquisition de données de valeur de mesure générées à l'aide du moyen de mesure ;
- génération d'entités d'objet en tant qu'entités par rapport à l'objet devant faire l'objet d'une capture métrologique ;
- génération d'entités de combinaison en tant qu'entités par rapport à l'objet devant faire l'objet d'une capture métrologique, les entités de combinaison représentant des opérations d'évaluation, plusieurs entités étant combinées pour déterminer les opérations d'évaluation ;
- délivrance en sortie des relations entre les entités générées, les relations étant représentées, lors de la sélection d'une entité prédéfinissable, au moyen d'éléments graphiques de pointage superposables ;
- sélection d'une entité de combinaison, calcul et délivrance en sortie des résultats des opérations d'évaluation correspondantes à partir des données de valeur de mesure acquises ;
dans lequel les entités d'objet sont représentées dans un premier groupe par l'intermédiaire du dispositif d'affichage et dans lequel les entités de combinaison sont représentées dans un second groupe par l'intermédiaire du dispositif d'affichage,
dans lequel, lors de la sélection d'une entité d'objet, les éléments graphiques de pointage mettent en évidence des liaisons vers les entités qui utilisent l'entité d'objet sélectionnée, et dans lequel, lors de la sélection d'une entité de combinaison, les éléments graphiques de pointage mettent en évidence des liaisons vers les entités qui sont utilisées en tant qu'entrée par l'entité de combinaison sélectionnée.

2. Procédé selon la revendication 1, **caractérisé en ce qu'**une entité de combinaison est basée sur plusieurs entités de sorte que l'entité de combinaison utilise plusieurs entités en tant qu'entités d'entrée, dans lequel une entité d'entrée est une entité d'objet ou une entité de combinaison.

3. Procédé selon l'une des revendications 1 ou 2, **caractérisé en ce que** des arêtes, des plans, des cercles, des sphères, des lignes et/ou des centres de gravité par rapport à l'objet à mesurer sont déterminés en tant qu'entités d'objet.

4. Procédé selon l'une des revendications 1 à 3, **caractérisé en ce que** des angles, des distances et/ou des coupes par rapport à l'objet à mesurer sont déterminés en tant qu'entités de combinaison.

5. Procédé selon l'une des revendications 1 à 4, **caractérisé en ce que** les relations d'une entité prédéfinissable sont représentées dès lors que l'entité prédéfinissable est sélectionnée.

6. Procédé selon l'une des revendications 1 à 5, **caractérisé en ce que** les éléments graphiques de pointage comprennent des lignes, des pointeurs et/ou des flèches.

7. Procédé selon l'une des revendications 1 à 6, **caractérisé en ce que** les entités sont sélectionnées par survol, par clic et/ou par navigation à l'aide des touches du clavier, de préférence les touches de curseur.

8. Procédé selon l'une des revendications 1 à 7, **caractérisé en ce que**, lors de la sélection d'une entité, un champ de propriété associé s'affiche.

9. Procédé selon l'une des revendications 1 à 8, **caractérisé en ce que**
le moyen de mesure est conçu pour mesurer des distances, des positions, des géométries, des couleurs et/ou des températures, et/ou
**en ce que** le moyen de mesure comprend un moyen de mesure optique, un capteur de distance laser, un capteur de profil laser, une caméra, un capteur de distance, un capteur de position, un capteur de géométrie, un capteur de couleur et/ou un capteur de température.

10. Système de mesure pour la mise en œuvre et la représentation d'un processus de mesure, à savoir pour la mise en œuvre d'un procédé selon l'une des revendications 1 à 9, le système de mesure comprenant au moins un dispositif informatique, au moins un dispositif d'affichage et au moins un moyen de mesure pour la capture métrologique d'un objet, dans lequel le processus de mesure peut être commandé par l'intermédiaire du dispositif d'affichage, et le système de mesure étant réalisé de sorte
que des données de valeur de mesure de l'objet, générées à l'aide du moyen de mesure, peuvent être acquises,
que des entités d'objet peuvent être générées en tant qu'entités par rapport à l'objet devant faire l'objet d'une capture métrologique,
que des entités de combinaison peuvent être générées en tant qu'entités par rapport à l'objet devant faire l'objet d'une capture métrologique, les entités de combinaison représentant des opérations d'évaluation, plusieurs entités pouvant être combinées pour déterminer les opérations d'évaluation ;
que des relations entre les entités générées peuvent être affichées par l'intermédiaire du dispositif d'affichage, les relations pour une entité prédéfinissable pouvant être représentées au moyen d'éléments graphiques de pointage superposables,
qu'une entité de combinaison peut être sélectionnée, et que des résultats des opérations d'évaluation correspondantes peuvent être calculés et délivrées en sortie à partir des données de mesure acquises ;
dans lequel les entités d'objet peuvent être représentées dans un premier groupe par l'intermédiaire du dispositif d'affichage et dans lequel les entités de combinaison peuvent être représentées dans un second groupe par l'intermédiaire du dispositif d'affichage,
dans lequel, lors de la sélection d'une entité d'objet, les liaisons vers les entités qui utilisent l'entité d'objet sélectionnée, peuvent être visualisées au moyen des éléments graphiques de pointage, et
dans lequel, lors de la sélection d'une entité de combinaison, les liaisons vers les entités qui sont utilisées en tant qu'entrée par l'entité de combinaison sélectionnée, peuvent être visualisées au moyen des éléments graphiques de pointage.

11. Produit-programme informatique comprenant un code de programme stocké sur un support lisible par machine et qui fournit et/ou exécute un procédé de mise en œuvre et de représentation d'un processus de mesure selon l'une des revendications 1 à 9 au moyen d'un système de mesure selon la revendication 10.
